(19) Europäisches Patentamt
European Patent Office
Office européen des brevets

(11) Veröffentlichungsnummer: **0 206 019**
**A1**

# (12) EUROPÄISCHE PATENTANMELDUNG

(21) Anmeldenummer: **86107555.4**

(22) Anmeldetag: **04.06.86**

(51) Int. Cl.[4]: **B 01 D 53/34**

(30) Priorität: **08.06.85 DE 3520671**

(43) Veröffentlichungstag der Anmeldung: **30.12.86 Patentblatt 86/52**

(84) Benannte Vertragsstaaten: **AT CH GB LI NL SE**

(71) Anmelder: **Kernforschungsanlage Jülich Gesellschaft mit beschränkter Haftung, Postfach 1913, D-5170 Jülich 1 (DE)**

(72) Erfinder: **Fiiss, Peter, Dr., Nordstrasse 8, D-5170 Jülich (DE)**
Erfinder: **Heldrich, Wolfgang, Dr., Friedensstrasse 40, D-5160 Düren (DE)**

## (54) Verfahren zur Reinigung heisser Abgase.

(57) Zum Reinigen schadstoffhaltiger Gase durch Kontaktieren der Gase mit einer auf Trägerkörpern haftenden Feststoffschicht wird die Feststoffschicht auf den Trägerkörper durch Benetzen mit einer Imprägnierlösung und durch Trocknen der Imprägnierlösung auf den Trägerkörpern aufgebracht. Die Feststoffschicht wird nach Reaktion mit den zu reinigenden Gasen von den Trägerkörpern wieder entfernt und anschließend durch Benetzen mit Imprägnierlösung und Trocknen erneut aufgetragen. Die Trägerkörper sind ortsfest angeordnet und werden mit der Imprägnierlösung berieselt. Sind die Trägerkörper benetzt, wird die Berieselung unterbrochen und die Imprägnierlösung auf den Trägerkörpern getrocknet. Bei Abklingen der Gasreaktion an der Feststoffschicht werden die ortsfesten Trägerkörper erneut mit Imprägnierlösung berieselt und durch Trocknen nachimprägniert. Die Feststoffschicht wird nach mehrmaligem Imprägnieren mit einer Waschlösung von den Trägerkörpern abgespült.

Gas

EP 0 206 019 A1

Kernforschungsanlage Jülich
Gesellschaft mit beschränkter Haftung

Verfahren zur Reinigung heißer Abgase

Die Erfindung bezieht sich auf ein Verfahren zur Reinigung heißer Abgase, wie es im Obergriff des Patentanspruches 1 angegeben ist.

Bei der Reinigung industrieller Abgase ist insbesondere das Abtrennen molekulardisperser Schadgasanteile von Bedeutung. Dies betrifft vor allem Schadgasmoleküle, wie HCL, HF, $SO_2$, $NO_x$. Es ist bekannt, solche Stoffe beispielsweise bei Feuerungsanlagen bereits im Brennraum selbst durch Feststoffreaktionen zu binden, z. B. durch Zugabe von Kalk, oder die Abgase in Abgaswäschern mit Waschlösungen zu reinigen. Abgaswäscher haben den Vorteil, daß für jeden zurückzuhaltenden Schadgasbestandteil eine geeignete Waschlösung ausgewählt werden kann und die Abgase ggfs. nacheinander entgiftet werden. Jedoch läßt sich die Wäsche wegen der damit verbundenen Befeuchtung des zu reinigenden Gases nur in einem begrenztem Temperaturbereich durchführen und erfordert im allgemeinen eine erneute Aufheizung der gereinigten Gase.

Aus der DE-PS 22 36 389 ist ein Verfahren zur Reinigung von Abgasen bekannt, bei dem die Abgase über Feststoffschichten geführt werden, mit denen die Schadgasanteile chemisch reagieren. Die Feststoffschichten werden auf rotierenden Platten aufgebracht, die in ein Lösungsmittelbad eintauchen und auf denen die Feststoffschicht aus dem Lösungsmittelfilm, der an der Plattenoberfläche der rotierenden Platten bei deren Auftauchen aus dem Lösungsmittelbard haftet, durch Eintrocknen des Lösungsmittels unter Ausnutzung der Wärme der zwischen den Platten strömenden heißen Abgase gebildet wird. Infolge der Rotation der Platten werden die Feststoffschichten kontinuierlich aufgetragen und nach Reaktion mit den Schadgasanteilen des Abgases von den Platten wieder abgelöst.

Der Apparategröße und damit dem maximalen Gasdurchsatz pro Apparat sind aus fertigungstechnischen und wirtschaftlichen Gründen Grenzen gesetzt. Auch sind insbesondere bei Reinigung von aggressiven Substanzen erhöhte Schutzmaßnahmen für die Lager der rotierenden Teile erforderlich.

Aufgabe der Erfindung ist es, Feststoffschichten, die mit molekulardispersen Schadgasanteilen von heißen Abgasen reagieren, auf innerhalb der Apparatur ortsfeste Trägerkörper aufzubringen, wobei sowohl das Aufbringen, Trocknen und wieder Ablösen der Feststoffschichten von den Trägerkörpern weitgehend verschleißfrei erfolgen soll.

Diese Aufgabe wird bei einem Verfahren der eingangs genannten Art durch die im kennzeichnenden Teil des Patentanspruchs 1 angegebenen Maßnahmen gelöst. Danach wird eine Imprägnierlösung auf die Trägerkörper als Rieselfilm, ähnlich dem Auftrag von Flüssigkeiten bei Rieselfilm- oder Füllkörpersäulen aufgebracht und auf den Trägerkörpern getrocknet. Nach Beendigung dieser Imprägnierung der Trägerkörper reagiert die gebildete Feststoffschicht mit den Schadgasanteilen des an der Feststoffschicht vorbeiströmenden Abgases. Die Schadgasmoleküle gelangen durch Diffusion oder turbulente Bewegungen an die Oberfläche der Feststoffschicht und werden dort durch chemische Reaktionen gebunden. Nimmt die Reaktionsfähigkeit der Schicht mit den gebundenden Schadgasmolekülen ab, so wird in einem weiteren Verfahrensschritt erneut Imprägnierlösung auf die Trägerkörper aufgebracht und auf den Trägerkörpern getrocknet. Eine solche Erneuerung der Feststoffschicht gelingt mehrmals und wird durchgeführt bis zu einer Feststoffschichtdicke, bei der insbesondere der steigende Strömungswiderstand für das Abgas beim Durchströmen der beschichteten Trägerkörperkolonne zu hohen Energieverlusten führt oder die Reaktionsfähigkeit der Feststoffschicht trotz Nachimprägnierung nicht mehr ausreichend ist oder auch ein selbstständiges Ablösen des Feststoffes vom Trägerkörper zu befürchten ist. Ist ein Nachimprägnieren nicht mehr vertretbar, werden die Trägerkörper gereinigt und stehen nach Ablauf des Reinigungsvorganges wieder zur Imprägnierung bereit. Der Verfahrenszyklus beginnt erneut.

Die Vorteile des erfindungsgemäßen Verfahrens bestehen vor allem darin, daß nach verhältnismäßig kurzen Imprägnierphasen die Reinigung heißer Gase an Feststoffschichten gelingt, ohne daß innerhalb der Apparatur die Trägerkörper für die Feststoffschichten bewegt werden müssen. Auch ist wesentlich, daß die Abgase nach Abschluß der Imprägnierphase nur noch mit einer trockenen Feststoffschicht in Berührung kommen und eine Störung der Feststoffreaktion durch verdampfendes Lösungsmittel ebenso wie eine Befeuchtung des Abgases vermieden wird.

Zur Trocknung des gebildeten Flüssigkeitsfilms lassen sich die heißen Abgase selbst nutzen, Patentanspruch 2. Je heißer die Abgase sind, um so kürzer ist die Trocknungszeit im Verhältnis zur Reaktionszeit der Feststoffschicht. Während des Imprägniervorganges kann der Abgasstrom gedrosselt oder die abströmenden Gase können rezykliert und durch einen Dampfabscheider geleitet werden, um die Dampfbildung und die Benetzung der Trägerkörper mit Imprägnierlösung optimal regulieren zu können.

Die verbrauchte Feststoffschicht kann durch Rütteln oder auch Abschlagen von den Trägerkörpern entfernt werden. Eine sehr schonende Reinigung ist in weiterer Ausbildung der Erfindung nach Patentansprüchen 3 - 5 vorgesehen. Die Trägerkörper werden gespült, insbesondere mit einer Waschlösung geflutet, in der sich die Feststoffschicht auflöst. Zur Beschleunigung des Ablöseprozesses kann die Waschlösung gepulst werden, also durch Druckstöße in der Weise bewegt, daß eine hohe Strömungsgeschwindigkeit und eine ständig wechselnde Strömungsrichtung für die Waschlösung an der Oberfläche der Trägerkörper erzeugt werden.

Bevorzugt werden zur Benetzung der Trägerkörper Imprägnierlösungen eingesetzt, die neben dem Reaktionspartner für die Bindung der Schadstoffanteile Zusätze enthalten, die zu Feststoffschichten führen, deren Oberflächenstruktur die Reaktion zwischen Abgas und Feststoffschicht begünstigen, wie es von katalytisch beschleunigten Prozessen bekannt ist, Patentanspruch 6. Solche Zusätze können beim Trocknen ein Gel mit porenreicher Struktur oder eine Gerüststruktur bilden, beispielsweise Wasserglas. Falls Schadgasanteile im Abgas enthalten sind, die es erforderlich machen, zur Ausbildung der Feststoffschicht verschiedenartige, beispielsweise miteinander nicht mischbare Imprägnierlösungen zu benutzen, so werden die Trägerkörper mit mehreren Imprägnierlösungen benetzt, Patentanspruch 7. Die Imprägnierlösungen lassen sich entweder in einem gemeinsamen Zuführungssystem zeitlich nacheinander oder in verschiedenen Zuführungssystemen eingeben, die örtlich versetzt zueinander angeordnet sind. Beim Aufbringen der Imprägnierlösungen wird dafür Sorge getragen, daß alle zur Reinigung des Abgases notwendigen Bestandteile der Feststoffschicht für die zu bindende Schadgasanteile zugänglich bleiben.

Um den erforderlichen Trocknungsprozeß des Flüssigkeitsfilms zu beschleunigen, sind als Trägerkörper beheizbare Rohre einsetzbar, Patentanspruch 8.

Die Erfindung, die auch eine Vorrichtung zur Durchführung des Verfahrens zum Gegenstand hat, wird nachfolgend anhand von Ausführungsbeispielen erläutert. Die Zeichnung zeigt im einzelnen:

Figur 1 Gasreinigungsanlage mit einer Füllkörperschicht als Trägerkörper für die Feststoffschicht.

Figur 2 Gasreinigungsanlage mit Rieselfilmrohren zur Ausbildung der Feststoffschicht.

Figur 3 Reaktor mit Hintereinandergeschalteten Böden zur Aufnahme von Füllkörpern.

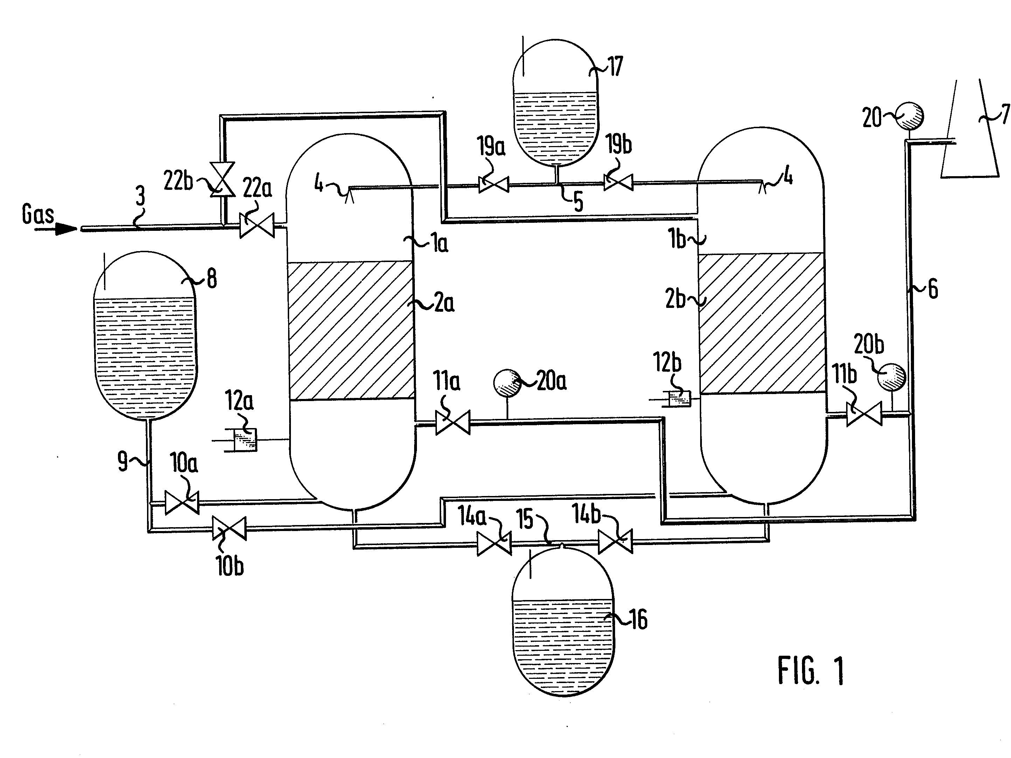

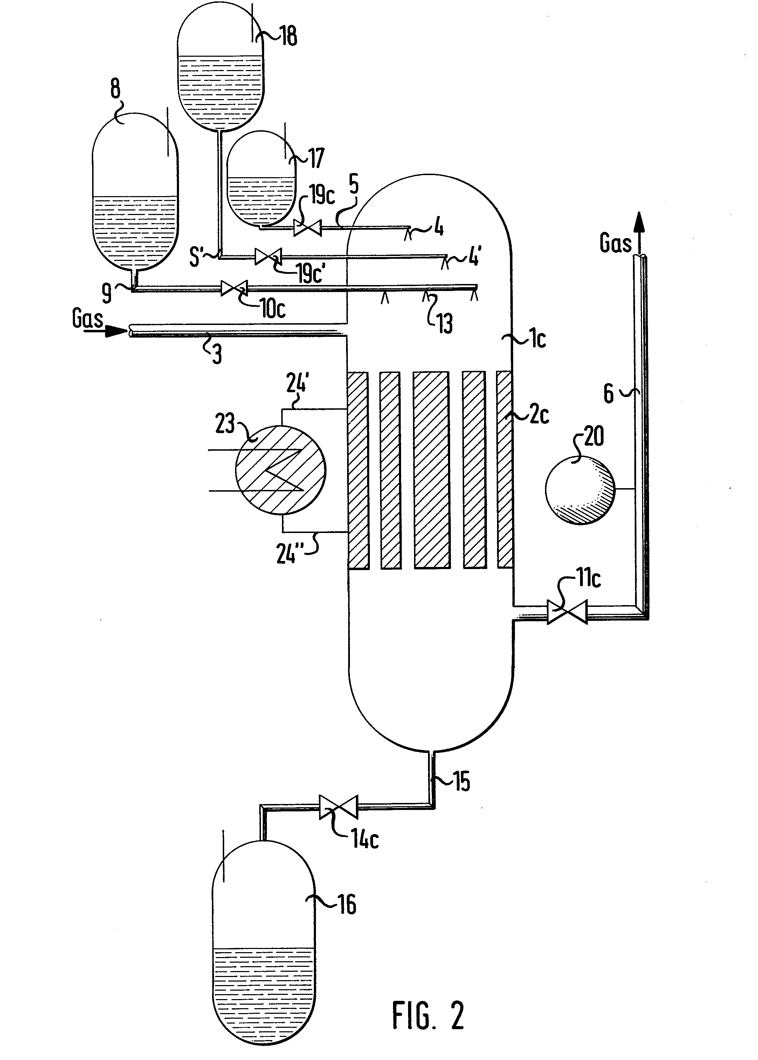

In Figuren 1 und 2 sind Anlagen zur Reinigung heißer Abgase schematisch dargestellt. Wesentlicher Teil der Anlagen sind Reaktoren 1a, 1b, 1c, in denen Trägerkörper 2a, 2b, 2c für eine auf denTrägerkörpern auszubildende Feststoffschicht angeordnet sind. Im folgenden werden solche Teile der Anlagen, die den Reaktoren 1a, 1b, 1c zuzuordnen sind, neben einer Bezugsziffer zusätzlich mit einem den Reaktor charakterisierende Buchstaben a, b, c bezeichnet. Anlagenteile, die unverändert bei allen Ausführungsbeispielen einzusetzen sind, erhalten lediglich die Bezugsziffer, die in allen Figuren identisch verwendet wird.

Das zu reinigende Abgas wird in die Reaktoren über eine Zuführung 3 eingeleitet. Zur Ausbildung der mit den Schadgasanteilen des Abgases reagierenden Feststoffschicht auf den Trägerkörpern 2a, 2b, 2c wird in die Reaktoren Imprägnierlösung eingeführt, die in den Ausführungsbeispielen mittels Verteilerdüsen 4, im Ausführungsbeispiel nach Fig. 2 zusätzlich mit Verteilerdüsen 4' auf die Trägerkörper 2a, 2b, 2c verteilt wird. Die Verteilerdüsen 4, 4' sind am Ende von Imprägniermittelleitungen 5, 5' angebracht. Der gebildete Flüssigkeitsfilm auf den Trägerkörpern wird in den Ausführungsbeispielen unmittelbar von den in die Reaktoren 1a, 1b, 1c einströmenden heißen Abgasen getrocknet. Die heißen Abgase durchströmen die Reaktoren 1a, 1b, 1c im Gleichstrom mit der von den Verteilerdüsen 4, 4' eingeführten Imprägnierlösung. Diese Strömungsführung der Abgase begünstigt die Verteilung der Imprägnierlösung auf der ganzen Höhe der Trägerkörper 2a, 2b, 2c.

Die nach dem Trocknen des Flüssigkeitsfilms auf den Trägerkörpern imprägnierte Feststoffschicht reagiert mit den Schadstoffanteilen des Abgases in der Weise, daß die Schadstoffanteile in der Feststoffschicht gebunden oder in umweltverträgliche Produkte umgesetzt werden. Zur Bindung von Schadstoffanteilen eignen sich als Imprägnierlösungen zur Ausbildung der Feststoffschicht beispielsweise NaOH- oder $NaCO_3$-Lösungen, gegebenenfalls mit Zusatz von Wasserglas oder Kalk zur Ausbildung einer oberflächenreichen Feststoffstruktur. Die Imprägnierlösungen sind zur Ausbildung der Feststoffschicht verhältnismäßig hoch konzentriert in die Reaktoren einführbar. Dies begrenzt die Befeuchtung des Abgases beim Imprägnieren der Trägerkörper. Die Feststoffschicht bietet dem vorbeistreichenden Abgas eine ausreichend große reaktionsbereite Fläche an. Die Fläche ist um mehrere Größenordnungen größer als es der monomolekularbelegten geometrischen Oberfläche der Trägerkörper entspricht und hat insgesamt ein besseres Reaktionsverhalten als ein Rieselfilm, an dessen Oberfläche das Abgas in der Imprägnierphase vorbeiströmt. Denn im Unterschied zum Rieselfilm müssen die Schadgasanteile zur Reaktion mit der Feststoffschicht nicht erst in die herabrieselnde Flüssigkeit eintreten. Nach Abschluß der Imprägnierphase und Ausbildung der Feststoffschicht wird das Abgas trocken gereinigt, es kommt also nicht mehr zu einer Abgasbefeuchtung durch verdampfendes Lösungsmittel. Wasser tritt bei der Reinigung des Abgases an der Feststoffschicht gegebenenfalls lediglich noch als Reaktionsprodukt bei Reaktion der Schadgasanteile mit der Feststoffschicht auf.

Im Ausführungsbeispiel nach Figur 1 werden als Trägerkörper 2a, 2b Füllkörper, beispielsweise Raschig-Ringe, Berlsche Sättel, Drahtspiralen oder Körner in einer vom Abgas durchströmten Schüttgutschicht verwendet, im Ausführungsbeispiel nach Figur 2 sind als Trägerkörper 2c dagegen Rieselfilmsäulen eingesetzt, an deren dem Abgas zugewandten Oberfläche die Imprägnierlösung aufgebracht und getrocknet wird. Das Abgas wird jeweils am Kopf der Reaktoren 1a, 1b, 1c eingeführt und unterhalb der Trägerkörper 2a, 2b, 2c abgezogen. Das Reingas strömt von allen Reaktoren über Reingasleitungen 6 in einen Kamin 7 und in die Atmosphäre ab.

Zur Ablösung der gebildeten Feststoffschicht nach deren Reaktion mit den Schadgasanteilen ist in die Reaktoren 1a, 1b, 1c eine Waschlösung einleitbar, mit der die Feststoffschicht von den Trägerkörpern entfernt wird. In die Reaktoren 1a und 1b wird die Waschlösung von unten eingeführt. In die Reaktoren mündet eine an einem Vorratsbehälter 8 für frische Waschlösung angeschlossene Rohrleitung 9 mit Absperrhähnen 10a, 10b noch unterhalb des Anschlusses der Reingasleitungen 6. Die Reingasleitungen können beim Fluten eines der Reaktoren mit Hähnen 11a, 11b geschlossen werden. Zur Beschleunigung des Ablösevorgangs der Feststoffschicht sind an den Reaktoren 1a, 1b Einrichtungen 12a, 12b zur Pulsierung der Waschlösung angeschlossen. Wird der Reaktor 1a geflutet, so strömt das Abgas in den parallel geschalteten Reaktor 1b ein. Der Reaktor 1b ist in gleicher Weise aufgebaut wie der Reaktor 1a und arbeitet bis auf die Reinigungsphase parallel zu diesem Reaktor. Wird einer der Reaktoren geflutet, übernimmt der andere die Reinigung des Abgases insgesamt.

Die als Trägerkörper 2c im Reaktor 1c eingesetzten Rieselfilmsäulen werden durch Spülen gereinigt. Die Waschlösung wird oberhalb der Trägerkörper 2c mittels Waschdüsen 13 über die am Vorratsbehälter 8 angeschlossene Rohrleitung 9 nach Öffnen eines Absperrhahnes 10c in den Reaktor eingeführt und löst die verbrauchte Feststoffschicht. Auch bei diesem Abspülvorgang ist die Reingasleitung 6 mittels eines Hahnes 11c verschließbar.

Nach Abschluß der Reinigungsphase wird die Waschlösung gegebenenfalls zusammen mit noch ungelösten Feststoffmaterial, das sich in der Waschlösung befindet, nach Öffnung von Ablaufhähnen 14a, 14b, 14c aus den Reaktoren 1a, 1b, 1c über am tiefsten Punkt der Reaktoren angeschlossene Ablaufleitungen 15 in einen Auffangbehälter 16 abgelassen.

Als Waschlösung wird im einfachsten Fall Wasser verwendet. Bei geringer Schadstoffkonzentration in der Waschlösung läßt sich eine wässrige Waschlösung nach Abtrennen gegebenenfalls enthaltender Feststoffteile auch erneut als Imprägnierlösung in die Reaktoren einführen, falls eine wässrige Imprägnierlösung eingesetzt wurde. Zweckmäßig wird dabei der Waschlösung zuvor frische Imprägnierlösung zugesetzt. Es lassen sich auch Waschlösungen einsetzen, in denen sich die Feststoffschichten zersetzen. So kann beispielsweise bei kalkhaltigen Feststoffschichten eine saure Waschlösung vorteilhaft sein.

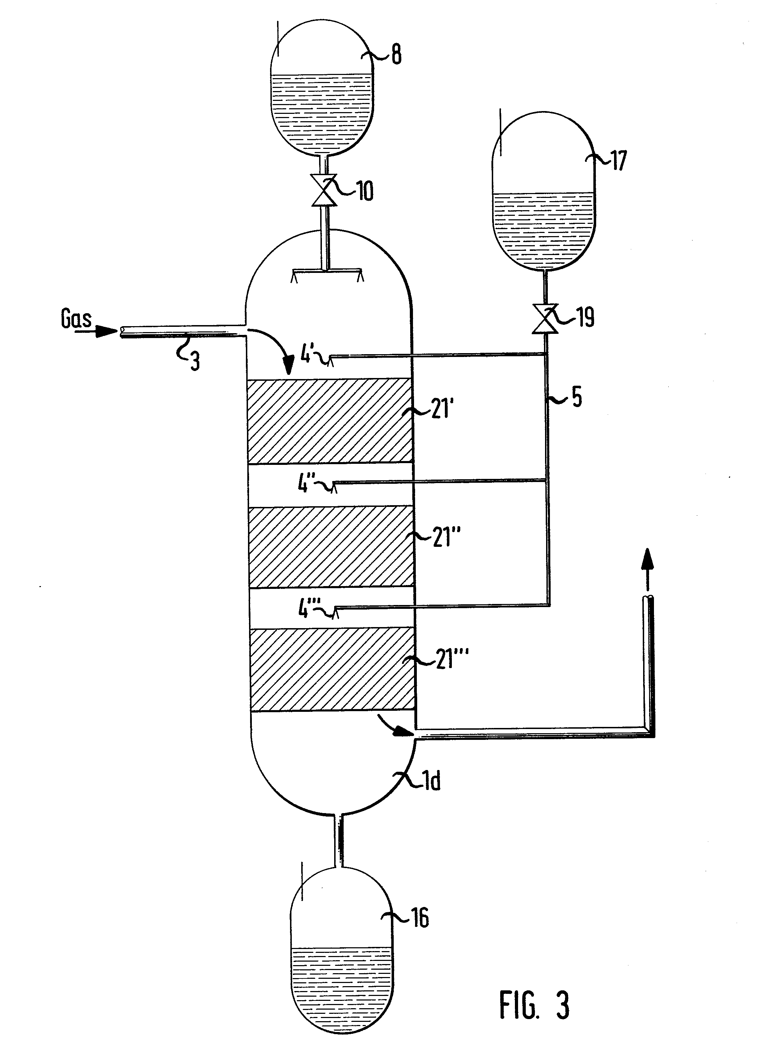

Die Imprägniermittelleitungen 5, 5' sind an Vorratsbehältern 17, 18 angeschlossen, aus denen die Imprägnierlösungen unter Einwirkung der Schwerkraft zu den Verteilerdüsen 4, 4' strömen. Die Imprägnierlösung wird intermittierend in die Reaktoren eingebracht. Regelventile 19a, 19b, 19c sowie 19c', die in den Imprägniermittelleitungen 5, 5' eingesetzt sind, regeln z.B. in Abhängigkeit vom Schadgasanteil im Reingas über spezifische mit den Reingasleitungen 6 in Verbindung stehende Gasanalysatoren 20, 20a, 20b den Zeitpunkt des Auftrags neuer Imprägnierlösung auf die Trägerkörper 2a, 2b, 2c. Es ist jeweils soviel Imprägnierlösung auf die als Trägerkörper 2a, 2b, 2c eingesetzten Füllkörper oder Rieselfilmsäulen aufzutragen, daß sich über der ganzen Höhe der Füllkörperschicht oder der Höhe der Rieselfilmsäulen eine reaktionsfähige Feststoffschicht ausbilden kann. Um dies zu erreichen, kann es zweckmäßig sein, die insgesamt zur Reinigung des Abgases zu durchströmende Feststoffschichtstrecke in einzelne Abschnitte zu unterteilen und zwischen jedem Streckenabschnitt zusätzliche Verteilerdüsen zum Auftrag von Imprägnierlösung auf die Trägerkörper einzusetzen. In Figur 3 ist ein Reaktor 1d mit mehreren, jeweils mit Füllkörpern gefüllten Böden 21', 21'', 21''' dargestellt, zwischen denen sich Verteilerdüsen 4d', 4d'', 4d''' zum Auftrag der Imprägnierlösung befinden. Die Verteilerdüsen sind über die Imprägniermittelleitung 5 mit einem Vorratsbehälter 17 für das Imprägniermittel verbunden. In der Imprägniermittelleitung befindet sich zum Öffnen und Schließen der Leitung ein Regelventil 19. Die Waschlösung wird dem Reaktor 1d oberhalb der obersten Füllkörperschicht 21' aus dem Vorratsbehälter 8 zugeführt. Das Abwaschen der verbrauchten Feststoffschicht entspricht somit dem Waschvorgang im Reaktor 1c.

Die Trägerkörper 2c im Reaktor 1c sind mit unterschiedlichen Imprägnierlösungen benetzbar. Hierzu münden im Kopf des Reaktors 1c mehrere Imprägniermittelleitungen 5, 5', deren Verteilerdüsen 4, 4' in der Weise versetzt zueinander angeordnet sind, daß die Imprägnierlösungen jede für sich in gleichmäßiger Verteilung den Rieselfilmrohren zugeführt wird. Die Zufuhr mehrerer Imprägnierlösungen ist beispielsweise erforderlich, wenn Schadgasanteile zur Reaktion Feststoffschichten benötigen, die aus im flüssigen Zustand nicht miteinander verträglichen Imprägnierlösungen gebildet werden und die beim Vermischen beispielsweise koagulieren oder Niederschläge bilden. Getrennte Lösungsmittelleitungen sind auch dann vorteilhaft, wenn zum Aufbau einer porenreichen Struktur einer aus einer sauren Imprägnierlösung ausbildbaren Feststoffschicht Wasserglas verwendet werden soll, das mit der sauren Imprägnierlösung nicht ohne weiteres mischbar ist. In diesem Falle werden die Wasserglaslösung und die saure Imprägnierlösung in verschiedenen Lösungsmittelleitungen in den Reaktor eingeführt.

Während der Imprägnierphase läßt sich die Zufuhr von Abgas im Ausführungsbeispiel nach Figur 1 mittels Regelventilen 22a, 22b drosseln oder ganz absperren. Diese Maßnahme kann erforderlich sein, um die Bildung der Feststoffschicht sowie das Verteilen des Flüssigkeitsfilms auf den Trägerkörpern zu regulieren. Wird die Abgaszufuhr gedrosselt oder abgesperrt, übernimmt jeweils der parallelgeschaltete Reaktor die Reinigung des Restgases. Zur Beschleunigung des Trocknungsvorganges sowohl bei Ausbildung der Feststoffschicht - insbesondere dann, wenn der Reaktor während der Trocknungsphase nur von einem Teil oder überhaupt nicht von Abgas durchströmt werden soll - als auch im Anschluß an die Waschphase kann eine Beheizung der Trägerkörper zweckmäßig sein. Im Reaktor 1c zirkuliert hierzu in den Zwischenräumen auf der von der Imprägnierlösung nicht benetzten Rohrwandseite der Rieselfilmrohre ein innerhalb eines Wärmeübertragers 23 erhitzbares Medium. Am Wärmeübetrager 23 sind in den Reaktor eingeführte Heizmittelleitungen 24', 24'' angeschlossen. Zur Trocknung ist es auch möglich, auf der benetzten Seite der Trägerkörper statt oder zusammen mit einem Teil der Abgase einen gesonderten Heizgasstrom einzusetzen. Durch Beheizung oder aber auch durch Kühlung der Trägerkörper läßt sich auch eine optimale Reaktionstemperatur für die Feststoffschicht während der Reinigungsphase einstellen.

Zur Kühlung des Mediums ist beispielsweise im Reaktor 1c statt des Wärmeübertragers 23 ein Kühler einzusetzen.

In einer Versuchsapparatur, die in ihrem Aufbau einem der in Figur 1 schematisch wiedergegebenen Reaktoren 1a, 1b entspricht, waren 1,5 l Raschig-Ringe der Abmessung 10 x 10 mm als Trägerkörper eingesetzt worden. Die Trägerkörperschicht wies einen Durchmesser von 10 cm und eine Füllhöhe von ca. 20 cm auf. In den Versuchsreaktor wurde als Abgas $CO_2$ mit einem Schadgasanteil von 800 ppm HCL und mit einer Eingangstemperatur von 200 - 250°C eingeleitet. Die eingeleitete Abgasmenge betrug 2 $m^3$ $CO_2$/h. Der Differenzdruck über der Höhe der Trägerkörperschicht betrug 100 Pa. Als Imprägnierlösung zur Ausbildung der Feststoffschicht wurde kaltgesättigte $Na_2CO_3$-Lösung verwendet, pro Imprägnierung wurden jeweils 50 ml Imprägnierlösung auf die Trägerkörper getropft. Es bildete sich nach Trocknung der Imprägnierlösung eine $Na_2CO_3$-Feststoffschicht aus, mit der die HCL-Anteile des Abgases zu NaCl unter Ausbildung von Wasser und Kohlendioxid umgesetzt wurden ($Na_2CO_3$ + 2HCl $\rightarrow$ 2 NaCl + $H_2O$ + $CO_2$).

Nachfolgend wird anhand einer Zeitablauftabelle der Zyklus der Imprägnierung der Trägerkörper und die Abhängigkeit der davon erreichten Schadgaskonzentration im abströmenden Reingas angegeben:

| Zeit (min) | Vorgang | Schadstoffgehalt am Ausgang |
|---|---|---|
| 0 | Imprägnieren mit 50 ml | |
| 2 | Ende der Dampfbildung | < 10 ppm HCl |
| 15 | trockenes Abgas, Trockenschicht | < 10 ppm HCl |
| 25 | " " | 25 " " |
| 30 | " " | 40 " " |
| 35 | " " | 60 " " |
| 40 | " " | 60 " " |
| 45 | Nachimprägnieren mit 50 ml | |
| 48 | Ende der Dampfbildung | < 10 ppm HCl |
| 50 | trockenes Abgas, Trockenschicht | < 10 ppm HCl |
| 60 | " " | < 10 ppm HCl |
| 70 | " " | 15 ppm HCl |
| 80 | " " | 40 ppm HCl |
| 90 | Abschalten, Abkühlen und Waschen (Weitere Nachimprägnierungen wären möglich gewesen) | -- |

Als Waschlösung wurde Wasser verwendet. Nach Reinigung der Feststoffschicht enthält die Waschlösung abgetrennte Schadstoffe in verhältnismäßig hoher Konzentration. Die Waschlösung kann naßchemisch weiter verarbeitet werden. Es erfolgt somit beim erfindungsgemäßen Verfahren getrennt voneinander einerseits die Reinigung der heißen Gase durch Reaktion an einer Feststoffschicht im trockenen Zustand bzw. nur unter geringer Befeuchtung der Abgase und andererseits die Weiterbehandlung der Schadstoffe auf naßchemischen Wege ohne Rückwirkung auf das gereinigte Abgas. Beim Ausführungsbeispiel entfielen von der Gesamtzeit für die Gasreinigung von 45 min lediglich 2 min auf die Ausbildung der Feststoffschicht. Nur innerhalb dieser relativ kurzen Zeit war eine Befeuchtung der Abgase in Kauf zu nehmen. Die Abgase werden somit in vorteilhafter Weise auch bei hohen Abgastemperaturen im wesentlichen trocken gereinigt, wobei die abgetrennten Schadstoffe naßchemisch beseitigt werden können.

Bei der in Fig. 2 wiedergegebenen Anlage ist zur Gasreinigung nur Reaktor 1c vorgesehen. Selbstverständlich kann auch in diesem Falle wie bei der Anlage nach Fig. 1 ein weiterer Reaktor parallel geschaltet werden, um auch während der Reinigungsphase oder bei gedrosseltem oder abgeschalteten Abgasstrom auch während der Imprägnierphase der Trägerkörper eine kontinuierliche Abgasreinigung zu gewährleisten.

Patentansprüche

1. Verfahren zum Reinigen schadstoffhaltiger Gase durch Kontaktieren der Gase mit einer auf Trägerkörpern haftenden Feststoffschicht, die durch Benetzen der Trägerkörper mit einer Imprägnierlösung und durch Trocknen der Imprägnierlösung auf den Trägerkörpern aufgebracht wird, und die nach Reaktion mit den Gasen von den Trägerkörpern entfernt und danach erneut aufgetragen wird, dadurch gekennzeichnet, daß mit der Imprägnierlösung ortsfeste Trägerkörper berieselt werden und daß die Berieselung nach Benetzung der Trägerkörper unterbrochen wird, daß die ortsfesten Trägerkörper nach Abklingen der Gasreaktion an der Feststoffschicht erneut mit Imprägnierlösung berieselt und nachimprägniert werden, und daß die Trägerkörper nach mehrmaligem Nachimprägnieren in einer Waschlösung gespült und von den verbrauchten Feststoffschichten gereinigt werden.

2. Verfahren nach Anspruch 1, dadurch gekennzeichnet, daß zur Trocknung der benetzten Trägerkörper die zu reinigenden Abgase verwendet werden.

3. Verfahren nach Anspruch 1 oder 2, dadurch gekennzeichnet, daß die Trägerkörper zur Reinigung gespült werden.

4. Verfahren nach Anspruch 3, dadurch gekennzeichnet, daß die Trägerkörper unter Fluten mit Waschlösung gereinigt werden.

5. Verfahren nach Anspruch 4, dadurch gekennzeichnet, daß die Waschlösung gepulst wird.

6. Verfahren nach einem der vorhergehenden Ansprüche, dadurch gekennzeichnet, daß die Imprägnierlösung Zusätze enthält, die eine für die Reaktion zwischen Gas und Feststoffschicht geeignete Oberflächenstruktur der Feststoffschicht erzeugen.

7. Verfahren nach einem der vorhergehenden Ansprüche, dadurch gekennzeichnet, daß die Trägerkörper mit mehreren, jeweils mit zu mindest einer der Schadgasanteile reagierenden Imprägnierlösungen benetzt werden.

8. Verfahren nach einem der vorhergehenden Ansprüche, dadurch gekennzeichnet, daß als Trägerkörper beheizbare Rohre eingesetzt sind.

9. Reaktor zur Durchführung des Verfahrens nach Patentansprüchen 1 bis 8 mit Trägerkörpern für eine aus einem Flüssigkeitsfilm durch Eintrocknen auszubildende Feststoffschicht sowie mit Gasein- und -auslaß für ein an der Feststoffschicht entlang geführtes heißes Abgas, dadurch gekennzeichnet, daß im Bereich der Trägerkörper (2a bis 2d) zumindest eine absperrbare Imprägniermittelleitung (5, 5') zum Auftrag des Flüssigkeitsfilms auf den Trägerkörpern (2a bis 2d) mündet, und daß in den Reaktor (1a bis 1d) eine absperrbare Leitung (9) für eine Waschlösung zum Reinigen der Trägerkörper (2a bis 2d) von verbrauchter Feststoffschicht eingeführt ist.

10. Reaktor nach Anspruch 9, dadurch gekennzeichnet, daß am Reaktor (1a bis 1d) eine Einrichtung (12a, 12b) zum Pulsieren der Waschlösung vorgesehen ist.

11. Reaktor nach Patentansprüchen 9 oder 10, dadurch gekennzeichnet, daß eine oder mehrere Imprägniermittelleitungen (5, 5') für verschiedene Imprägnierlösungen im Bereich der Trägerkörper (2c) münden.

12. Reaktoren nach einem der Patentansprüche 9, 10 oder 11, dadurch gekennzeichnet, daß zumindest zwei Reaktoren (1a, 1b) parallel geschaltet und parallel und alternativ betreibbar sind.

Gas
3
22b
22a
4
19a
17
19b
4
5
20
7
1a
1b
8
2a
2b
6
20b
12b
11a
20a
11b
12a
9
10a
14a
15
14b
10b
16

FIG. 1

18
8
17
5
19c
4
4'
S'
19c'
9
10c
13
Gas
3
1c
Gas
6
24'
23
2c
20
24''
11c
15
14c
16

FIG. 2

8
17
10
19
Gas
3
4'
5
21'
4''
21''
4'''
21'''
1d
16

FIG. 3

Europäisches Patentamt

# EUROPÄISCHER RECHERCHENBERICHT

0206019

Nummer der Anmeldung

EP 86 10 7555

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | JAPANESE PATENTS REPORT, Band 78, Nr.12, 1978, Teil: Chemical Engineering, Seite 2; Derwent Publications, London, GB; & JP-A-78 007 394 (SHOWA DENKO K.K.) 17.03.1978 * Zusammenfassung * --- | 1,3 | B 01 D 53/34 |
| A | DE-A-3 122 349 (A. BOHMEKE) * Ansprüche 1,4,9; Seiten 7,8 * --- | 1,6,7 | |
| A | US-A-4 036 597 (P. FILSS) * Spalten 2-4 * ----- | 1,2,6, 8 | |
| | | | RECHERCHIERTE SACHGEBIETE (Int. Cl.4) |
| | | | B 01 D 53/00 |

Der vorliegende Recherchenbericht wurde für alle Patentansprüche erstellt.

| Recherchenort | Abschlußdatum der Recherche | Prüfer |
|---|---|---|
| DEN HAAG | 15-09-1986 | POLESAK, H.F. |

KATEGORIE DER GENANNTEN DOKUMENTE

- X von besonderer Bedeutung allein betrachtet
- Y von besonderer Bedeutung in Verbindung mit einer anderen Veröffentlichung derselben Kategorie
- A technologischer Hintergrund
- O nichtschriftliche Offenbarung
- P Zwischenliteratur
- T der Erfindung zugrunde liegende Theorien oder Grundsätze
- E : älteres Patentdokument, das jedoch erst am oder nach dem Anmeldedatum veröffentlicht worden ist
- D : in der Anmeldung angeführtes Dokument
- L : aus andern Gründen angeführtes Dokument
- & : Mitglied der gleichen Patentfamilie, übereinstimmendes Dokument

EPA Form 1503 03 82